Europäisches Patentamt

(19) European Patent Office

Office européen des brevets

(11) Publication number: **0 178 753**
**B1**

## (12) EUROPEAN PATENT SPECIFICATION

(45) Date of publication of the patent specification:
**13.09.89**

(21) Application number: **85304938.5**

(22) Date of filing: **10.07.85**

(51) Int. Cl.⁴: **C04B 35/56**

(54) **Process for producing a sintered silicon carbide/carbon composite ceramic body having ultrafine grain microstructure.**

(30) Priority: **29.08.84 US 645462**

(43) Date of publication of application:
**23.04.86 Bulletin 86/17**

(45) Publication of the grant of the patent:
**13.09.89 Bulletin 89/37**

(84) Designated Contracting States:
**CH DE FR GB IT LI NL SE**

(56) References cited:
**EP-A- 0 110 053**
**EP-A- 0 145 496**
**DE-A- 3 344 050**
**US-A- 4 346 049**

**CHEMICAL ABSTRACTS, vol. 101, no. 22,
November 1984, page 296, no. 196960j, Columbus, Ohio,
US; & JP - A - 59 131 577 (EAGLE INDUSTRY CO.,
LTD.) 28-07-1984**

(73) Proprietor: **STEMCOR CORPORATION, 200 Public
Square, Cleveland Ohio 44114-2375(US)**

(72) Inventor: **Boecker, Wolfgang Dietrich Georg,
403 Morgan Drive, Lewiston New York 14092(US)**
Inventor: **Reini, George I., 320 Merrie Road, Lewiston
New York 14092(US)**

(74) Representative: **Fisher, Bernard et al, Raworth, Moss &
Cook 36 Sydenham Road, Croydon Surrey CR0 2EF(GB)**

## Description

This invention relates to a process for producing a sintered silicon carbide/carbon composite ceramic body.

The chemical and physical properties of silicon carbide make it an excellent material for high temperature structural applications. These desirable properties include good oxidation resistance and corrosion resistance, high heat transfer coefficient compared to metals and other ceramics, low expansion coefficient compared to metals, high resistance to thermal shock and high strength at elevated temperatures. Undesirable characteristics of known bodies of essentially pure silicon carbide, particularly those produced by known pressureless sintering processes, include inability to be electrical discharge machined at an acceptable rate, poor electrical conductivity, high sensitivity of microstructure to sintering conditions, growth of microstructure upon extended or repeated exposure to high temperatures, and a need to precisely estimate the amount of shrinkage which will occur upon sintering to avoid retooling if different dimensions than estimated result or are desired.

It is, therefore, believed desirable to enable the production of silicon carbide/carbon composite ceramic bodies having a density which is a high percentage of the theoretical density and suitable for engineering material uses, such as for example, high temperature applications involving relatively moving parts made to close dimensional tolerances. Silicon carbide has been identified as a preferred material for such applications (for example, refer to U.S. Patent 4 312 954). Silicon carbide/carbon composite ceramic bodies produced by the present method may, in some instances, be even more advantageously employed than substantially pure silicon carbide bodies because these composite bodies in certain embodiments have a very fine grain microstructure that is easy to obtain on a repetitive basis because the shaped green body and process used in the manufacture of such composite bodies is relatively undemanding of exact temperature/time control during sintering. It is believed that certain embodiments will exhibit greater resistance to thermal shock and can withstand greater temperature differentials than known sintered silicon carbides. Some embodiments provide a self-lubricating characteristic which may be advantageously employed, for example, in mechanical seals. Other factors being equal, an ultrafine polycrystalline grain structure is desirable because it increases strength and resistance to mechanical impact loading, which properties depend upon the largest flaw present in a particular sintered ceramic body of a given material. The electrical conductivity of certain embodiments enables electrical discharge machining of these bodies as well as other electrical applications, e.g. high temperature heating elements for an inert atmosphere. This represents a significant advance in that sintered silicon carbide bodies previously were machined using expensive diamond tools which caused damage to the surface of the body being machined resulting in lower rupture resistance. The fracture toughness of certain embodiments exceeds that of known pressureless-sintered silicon carbide having a density that is a similar degree of theoretical density. Use of the present process provides lower shrinkage and/or a method to control shrinkage and porosity of sintered silicon carbide composites.

Composite bodies of silicon carbide/graphite have heretofore been produced by reaction bonding (also known as reaction sintering) and hot pressing. Reaction sintering involves use of silicon impregnants to upgrade the density of silicon carbide through reaction with excess carbon in the substrate. Reaction sintering is useful for many applications but is undesirable where excess silicon exuding from the silicon carbide body would be detrimental (e.g. high temperatures in excess of 1400°C). Hot pressing (the production of high density silicon carbide/graphite composite ceramic bodies by simultaneous application of heat and pressure) is impractical for complex shapes because of complex mould design and high uniaxial pressure. The pressure required (typically of the order of greater than 1000 psig) deforms the body. Difficulty or impossibility may be encountered in removing the hot pressed part from its complex mould. As the mould configuration is increased in complexity it becomes more difficult or impossible to remove the hot pressed part.

DE-A 3 344 050 and US-A 4 346 049 and Chemical Abstracts Volume 101, number 196 960 j disclose various processes for producing a sintered silicon carbide/carbon composite ceramic body but none of them discloses infiltrating the shaped object with a sufficient amount of an organic material which can be coked at temperatures below sintering temperature to form amorphous carbon.

EP-A 110 053 discloses a process for producing a polycrystalline moulded article from silicon carbide and, amongst a number of steps disclosed as essential to achieving its ends, a step is disclosed of sintering in an atmosphere containing silicon and nitrogen. These vapours are produced by including a sample of silicon nitride in the sintering vessel. Also disclosed is the fact that additional carbon can be introduced in a silicon carbide composite body by infiltrating a shaped green body of silicon carbide with an organic material, which can be coked at temperatures below the sintering temperature to form amorphous carbon, to improve the homogeneity of the microstructure of the sintered body. Both the infiltration step and the sintering atmosphere containing silicon and nitrogen are said to be essential.

According to the present invention, there is provided a process for producing a sintered silicon carbide/carbon composite ceramic body comprising:

a. forming a homogeneous mixture comprising the components of:

(1) a carbon-containing additive selected from the group consisting of amorphous carbon, and a solvent soluble, organic material which can be coked at temperatures below about 1000°C to form amorphous carbon or mixtures thereof, in an amount between 0.5 and 5 percent by weight of uncombined carbon;
(2) from about 0.15 to about 15 percent by weight of a sintering aid selected from the group consisting of aluminum, beryllium or boron or compounds containing any one or more of these elements or a mixture of any of the foregoing elements or compounds, said sintering aid containing from about 0.15 to about 5 percent by weight of aluminum, boron or beryllium or a mixture of any of these elements;
(3) up to about 25 percent by weight of organic temporary binder;
(4) a balance of silicon carbide powder having a surface area of from about 5 to about 100 square meters per gram;
b. shaping the mixture in such a way as to produce a microporous shaped object having a density of at least about 45 percent of theoretical; and
c. infiltrating the shaped object with a sufficient amount of an organic material which can be coked at temperatures below sintering temperature to form amorphous carbon, in an amount between about 1 and 25 percent by weight of the shaped object;
d. firing the infiltrated object in a vacuum or in an atmosphere substantially free of silicon vapour and inert to silicon carbide in the absence of any substantial externally applied pressure under such conditions of time and temperature at a temperature of between about 1900°C and 2300°C until a sintered body having a homogeneous microstructure of silicon carbide grains having a maximum size of about 5 microns, said microstructure having carbon substantially uniformly dispersed throughout, is formed.

In this specification, unless otherwise indicated, all quantities, proportions and ratios are stated on a weight basis.

The term "microporous" and related forms, as used in this specification and appended abstract and claims, refers to a characteristic of the shaped object prior to completion of sintering and means that such shaped object has interconnected microporosity which enables infiltration by a fluid such as an organic resin.

For a better understanding of the invention and to show how the same may be carried into effect, reference will now be made, by way of example, to the accompanying drawing, in which: --

Figure 1 is a flow chart illustrating a preferred process embodiment for manufacture of sintered silicon carbide/carbon composite ceramic bodies. Dashed lines depict variations of processes.

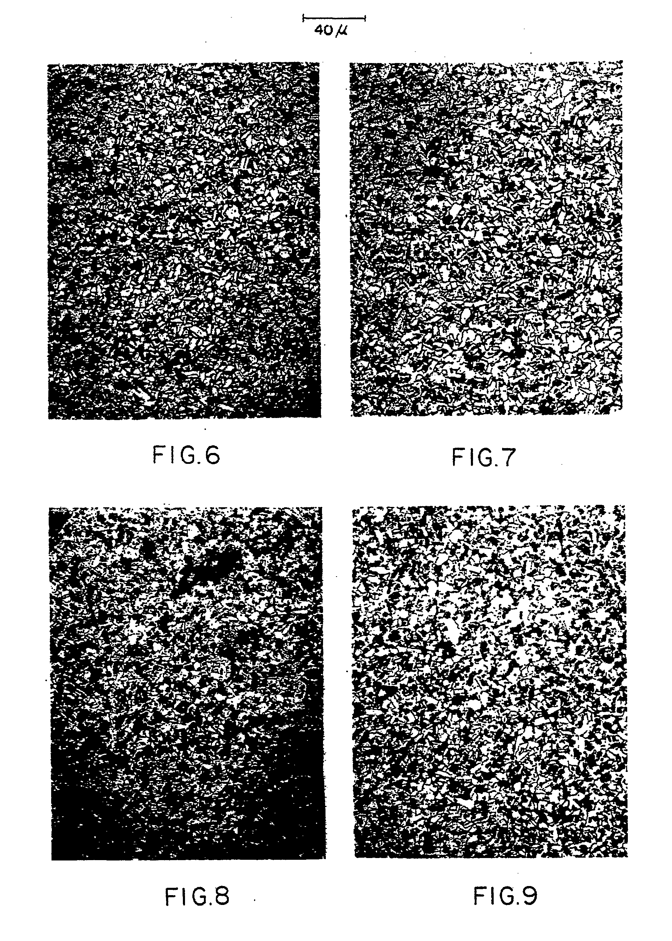

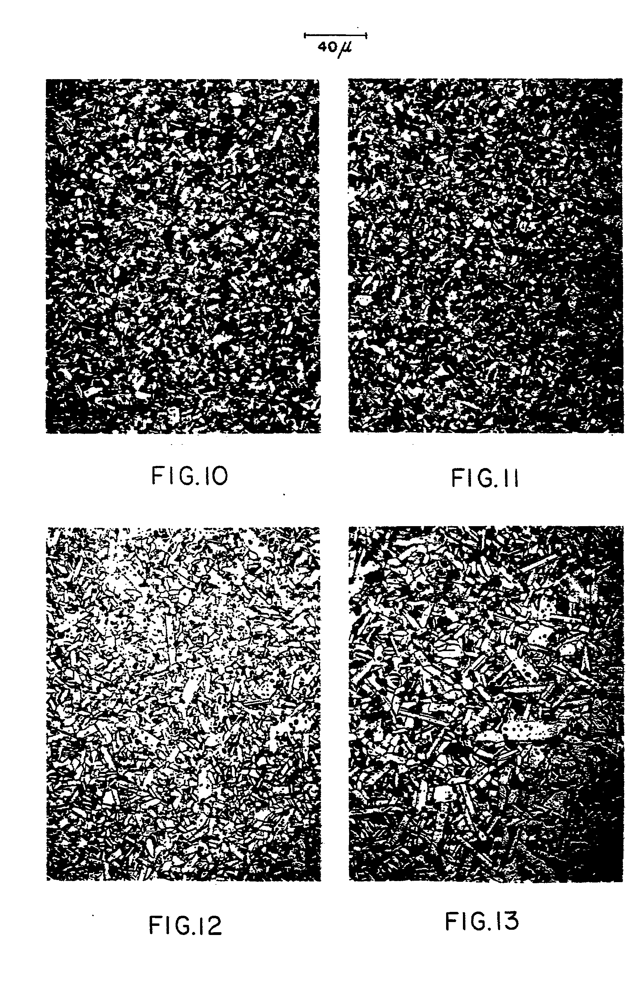

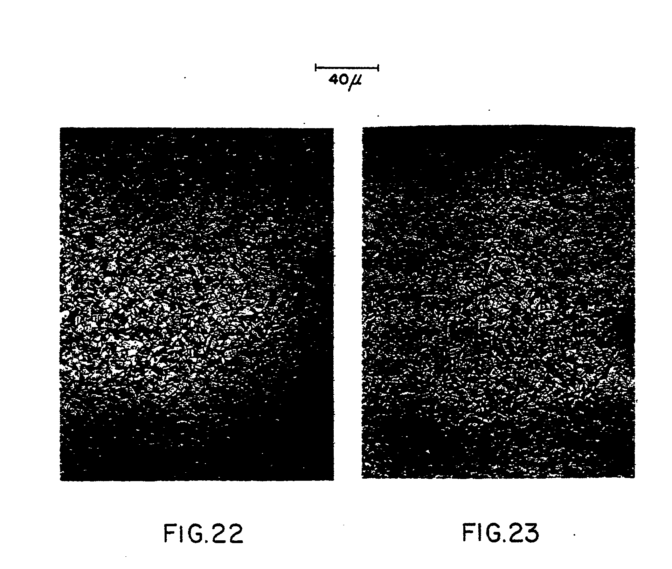

Figures 2, 4, 6, 8, 10–14, 16, 18, 20 and 22 show at a magnification of about 500 times, microstructures resulting from sintering in a tube furnace at 2150°C for 30 minutes in argon of bodies having, by calculation and formulation, compositions as given in Table I.

Figures 3, 5, 7, 9, 15, 17, 19, 21 and 23 show at a magnification of about 500 times, microstructure of compositions as given in Table I resulting from sintering in a tube furnace at 2150°C for 30 minutes in argon followed by cooling to ambient and subsequently repeating this cycle.

The theoretical density of silicon carbide is 3.21 g/cc. Sintered SiC/c composite bodies produced by the present process may have a density which is any percentage of theoretical density based on the law of mixtures. The preferred minimum density for sintered silicon carbide/carbon composite ceramic bodies corresponds to about 75 percent of theoretical density. More highly preferred for some applications is a density which corresponds to at least 80 percent of theoretical and for other applications a density which is at least 90 percent of theoretical. Higher density is generally desired where a low porosity and high modulus are desired. As used herein, the value of theoretical density, as it applies to a composite, is computed according to the law of mixtures which assumes that no solid solutions exist for purposes of the computation. To assure a proper understanding of the theoretical density as the term is employed herein, the following example is provided. The theoretical density of a composite comprising 3 percent graphite, 0.4 percent $B_4C$, 2 percent uncombined carbon in a form other than graphite, and 94.6 percent silicon carbide is 3.140 g/cc. The theoretical density of carbon or graphite is 2.25 g/cc. The theoretical density for $B_4C$ is 2.51 g/cc; The theoretical density is the reciprocal of the sum of the volume fractions of the constituent components. Thus, for this example, it is 1 / (0.03 / 2.25 + 0.004 / 2.51 + 0.02 / 2.25 + .946 / 3.21) = 1 / (.31852) = 3.140 g/cc. Similarly computed, the theoretical density for a composite comprising 8 weight percent graphite, 5 weight percent Be, 2 percent uncombined C in a form other than graphite and 85 percent silicon carbide is 2.97 g/cc.

## 1. Starting Components or Ingredients

### A. Silicon Carbide Powder

The silicon carbide starting material can be obtained from any of a variety of sources. Vapor phase reactive material is produced in fine particle size and can be used if desired. Larger material can be ball milled until sufficient amounts of fine silicon carbide are obtained and the proper size of silicon carbide can be selected from the ball milled product by conventional means, such as water sedimentation.

The crystalline habit of the silicon carbide starting material is not believed to be critical. Alpha, non-cubic silicon carbide is more readily available than beta silicon carbide, lower in price and more thermodynamically stable and, therefore, the preferred starting material. It is acceptable, however, to use silicon carbide that has been made by a process which produces mixtures of alpha and beta silicon carbide and, thus, the next most preferred silicon carbide is that which is predominately alpha, non-cubic crystalline silicon carbide. It is also possible to utilize high purity beta silicon carbide powder but such material is not preferred because of its high expense in the requisite high purity form.

Preferably, the silicon carbide material is relatively free of materials such as silicon, silicon dioxide and other oxygen sources which may interfere with the sintering operation. To ensure this, the silicon carbide material may be treated prior to its use in the present processes with acid (such as hydrofluoric and/or nitric acids, particularly mixtures of hydrofluoric and nitric acids) to remove extraneous materials such as silicon, silicon dioxide and other oxygen sources which may interfere with the sintering operation.

The silicon carbide powder must be of fine particle size. Suitable silicon carbide powders have maximum particle size of 8 microns or less, and preferably submicron size particles predominate. It is difficult, however, to obtain accurate particle size distributions for silicon carbide powders having a particle size of much less than 1 micron and the surface area of the silicon carbide particle is a more relevant characteristic in determining suitable material. Accordingly, the preferred silicon carbide particles for use in the present process to produce sintered composite ceramic bodies are specified as having from about 5 to about 100 square meters/gram surface area. Within this range, it is more preferred that the surface area of the silicon carbide particles range between about 5 and 50 square meters/gram and within this range surface areas between about 7 and about 15 square meters/gram have been found to be easily obtainable and quite useful for producing sintered composite ceramic bodies.

The silicon carbide powder may contain minor amounts of impurities such as graphite, aluminum, boron or free silicon without deleterious effect; generally, a purity of greater than about 95 percent is required and a higher purity, i.e. 97 percent or more, is desired. Acceptably pure and suitable silicon carbide powder is described in U.S. Patent 4,123,286 to Coppola et al. Commercially available silicon carbide powder usually contains some uncombined carbon in the form of graphite, typically about one-half percent and up to 2 percent. The total graphite present should be adjusted accordingly to maintain the limits herein set forth. The amount of free silicon should be such that the raw batch does not contain more than about one percent of free silicon. The amount of free silicon can be higher as this will be converted in situ to SiC by the free carbon present. Thus the amount of free silicon must be taken into account when determining the amount of carbon desired in the composite.

The silicon carbide powder may be doped with a sintering aid prior to its use in the present process. In this event, the amount of sintering aid subsequently added is accordingly adjusted downward or altogether eliminated. Pre-doping of the silicon carbide powder may be accomplished by adding a sintering aid during formation of the silicon carbide powder. The silicon carbide powder may also be doped after its formation by heating in the presence of a sintering aid.

B. Graphite Powder

While graphite powder is an optional ingredient, it may be employed to provide pressureless-sintered silicon carbide/carbon composite bodies of varying density and porosity. Lower densities at a given porosity are obtainable when graphite powder is employed in combination with infiltration than when infiltration alone is used. The graphite starting material can be obtained from any of a variety of sources. Larger material can be ball milled until sufficient amounts of fine graphite powder are obtained and the proper size of graphite can be selected from the ball milled product by conventional means. A suitable graphite powder is known as Dixon Airspun Graphite available from Joseph Dixon Crucible Company of Jersey City, New Jersey. This product may be further reduced in particle size by processing it in a vibro-energy mill such as that available from SWECO for four hours using silicon carbide media in heptane. An especially preferred graphite is available from Lonza Incorporated, Fairlawn, New Jersey under the name Lonza graphite grade KS 2.5. This powder has an average available particle size of about 2.5 microns and a specific surface area exceeding about 20 square meters/gram as determined by using nitrogen at 77°K as the adsorbate. Its hydrophyllic (that is, easily wet with water when compared to other available graphite powders) nature facilitates processing. Suitable graphite powders have an average particle size not in excess of 8 microns, preferably not in excess of 5 microns, and more preferably from about 2 to about 4 microns, and most preferably less than 2 microns. It is difficult, however, to obtain accurate particle size distributions for graphite powders due to their platelike nature. In the particle size range of interest the specific surface area of the graphite particle is considered the more relevant characteristic in determining suitable material. Accordingly, suitable graphite particles are specified as having a specific surface area of at least about 5 square meters/gram, more preferably at least about 18 square meters/gram and most preferably at least 22 square meters/gram, but not exceeding 100 square meters/gram. The graphite powder should be at least of 95 percent purity and should not contain impurities as mentioned above with respect to the SiC powder which may interfere with sintering. Less desired are graphite materials containing carbon in other forms because these will result in a higher total carbon content for a given graphite content, thereby lowering the desirable properties of the resulting composite silicon carbide/graphite/carbon ceramic body that are derived from graphite.

4

## C. Sintering Aid

Materials which promote self-diffusion and/or form solid solutions with the silicon carbide powder at sintering temperatures are utilized as sintering aids. Materials suitable as sintering aids are selected from the group consisting of boron, aluminum, beryllium or compounds containing any one or more of these or a mixture of any of the foregoing elements or compounds in the immediate presence of amorphous carbon. Nitrides and carbides of aluminum, boron and beryllium, as well as compounds of these such as aluminum diboride, are particularly useful as sintering aids.

The amount of sintering aid to be employed is best considered in relationship to the amount of silicon carbide present. The amount of sintering aid expressed as a molar ratio of the amount of elemental aluminum, boron or beryllium present relative to silicon carbide powder should be from about 0.006 to about 0.20. These amounts of sintering aid when expressed in term of percent of the weight of the raw batch are from about 0.15 to about 15 percent by weight of the raw batch ingredients. Thus, sintering aid should be present in a quantity sufficient to provide from about 0.15 to about 5.0 percent by weight of silicon carbide of elemental aluminum, boron or beryllium and preferably from about 0.30 percent minimum. When the sintering aid is present in an amount sufficient to yield greater than about 3 percent of weight of elemental aluminum, boron or beryllium, no further advantage has been identified regarding densification of the silicon carbide matrix and the excess sintering aid may be present in the final product as a dinstinct crystalline phase. Conversely, when less than 0.15 percent by weight of elemental aluminum, boron or beryllium is provided based on the weight of silicon carbide present, the desired densification of the silicon carbide/graphite composite to at least 75 percent of theoretical does not reliably occur when sintering is conducted in the absence of externally applied pressure. The best results with regard to densification are obtained with boron carbide ($B_4C$) as a sintering aid in quantities that result in sintered articles having a content of from about 0.3 to 3.0 percent by weight of boron. When boron is used, the optimum level in the sintered article is believed to be about 0.5 weight percent (2 mole percent). When aluminum is used, the optimum level is believed to be about 1.0 percent.

It has not been found necessary to increase the amount of sintering to counteract absorption by the graphite powder or the carbon resulting from in situ coking of an organic material within a unsintered preshaped object.

Boron and boron carbide are a particularly preferred sintering aids. Of these boron carbide is most preferred due to its lower cost and greater availability. Boron carbide is essentially a non-stoichiometric material and various boron carbide materials having a molar ratio of boron to carbide between 8 to 1 and 2 to 1 have been reported. It is generally preferred to use boron carbide as the boron source and particularly a form of boron which is called "solid state reacted boron carbide" having a molar ratio of boron to carbon between about 3.5 to 1 and 4.1 to 1. Such a solid state reacted boron carbide can be produced in accordance with the process of U.S. Patent No. 3,379,647 to P.A. Smudski. Boron carbides having a molar ratio of boron to carbide even greater than 4.1 to 1 are quite desirable but these materials are relatively less available and considerably more expensive and are, therefore, not preferred. The boron source can be crystalline or non-crystalline and preferably is particulate and of a size less than 30 microns. Within this limitation, it is preferred that the source be of a size ranging from about 0.1 to about 10 microns to facilitate forming a homogenous mixture with the other component ingredients.

## D. Carbon

As previously mentioned, carbon is also necessary to be present in an amorphous form in specified quantity at the commencement of sintering to yield highest densification. Additional carbon beyond that necessary to effect highest densification is added to provide a pressureless-sintered silicon carbide/carbon composite body. When it is desired to provide a mixture which can be pressureless sintered to greater than 96 percent of theoretical density, it is present in an amount from about 1.0 up to about 5 percent by weight of the batch. This amorphous carbon is best provided by use of an organic solvent soluble, organic material which can be coked at temperatures below about 1000°C to form amorphous carbon. Particularly preferred materials are phenolic resins and coal tar pitch which have char yields of from about 40 to 60 percent, respectively, although any solvent soluble organic material, which can be coked to provide amorphous uncombined carbon having a carbon content of from about 25 to about 75 percent by weight is acceptable. From about 0.67 to about 17 percent by weight of such an organic solvent soluble organic material is employed in the raw batch from which the shaped object is formed. It is preferred that the organic material have a char yield of from about 33 to about 50 percent by weight and more particularly from about 40 to about 45 percent by weight. The most preferred amount of carbonizable organic material in the sintered composite ceramic body is believed to be that which will yield about 2 percent by weight carbon char and, thus, the optimum raw batch for preparation of the shaped object should contain about 5 percent by weight of an organic solvent soluble organic material having a char yield between about 40 and 45 percent by weight. Particularly useful are B-stage resole phenolic resins. Also useful, for example, are thermosetting resins, such as epoxy resins and phenol formaldehyde resins of the novolac type. A particularly good carbon source material is polyphenylene resin which provides a char yield up to 80 percent. Polyphenylene resins are available from Hercules, Incorporated, Wilmington, Delaware. Highly suitable resins are Plyophen$^{tm}$ 90-151, a phenol formaldehyde product available from Reichold Chemicals, Inc. White Plains, New York and B178, a B-stage resole phenolic resins available from Varcum Chemical Company, Niagara Falls, New York. Sugar solutions, e.g. Karo$^{tm}$ syrup may be used although they are not preferred due to low yield of carbon.

Thermoplastic resins are not generally useful as primary sources of amorphous carbon because of their relatively low char yields. Additionally, such materials volatilize at baking temperatures of the present process and, as a result, contribute little, if any, of the required amorphous carbon.

The necessary amorphous carbon may be supplied, in whole or in part, to the mixture in the form of particulate carbon black, for example acetylene black, advantageously having a surface area of between about 10 and about 400 square meters/gram. The use of carbon black is, however, not preferred due to handling inconvenience and greater difficulty in forming a homogeneous sinterable powder mix. A solvent or temporary binder is helpful when forming sinterable powders using carbon black as the source of amorphous carbon.

These same resinous carbon source materials are used in impregnation of the shaped object.

### E. Temporary Binder

The raw batch may contain optionally a temporary binder to facilitate forming and retention of green strength of a shaped green body from the raw batch which body is to be thereafter sintered. The temporary binder may be employed up to about 25 percent by weight of the batch. Suitable temporary binders include polyvinyl alcohol, coal tar pitch, long chain fatty materials, such as oleic acid, metallic stearates such as oleic acid, metallic stearates, polyolefins and mineral oils, sugars, starches, alginates and polymethyl phenylene. It is to be noted that the temporary binder, when present, may contribute to the quantity of carbon char (amorphous carbon) present in the raw batch and the total carbon necessary for sintering should be adjusted accordingly to maintain the limits herein set fourth. It is also to be noted that a carbonizable resin, particularly a thermosetting one, may serve both as a carbon source and a temporary binder. An eminently suitable temporary binder is polyvinyl alcohol having associated therewith from about 5 to about 15 parts by weight of water per part of polyvinyl alcohol as a temporary binder vehicle. In particular, it is preferred to use about 10 parts by weight polyvinyl alcohol plus 90 parts by weight of water as a temporary binder vehicle.

### 2. Method of Making

#### A. Mixing of the raw batch (pressureless sinterable silicon carbide pre-mix)

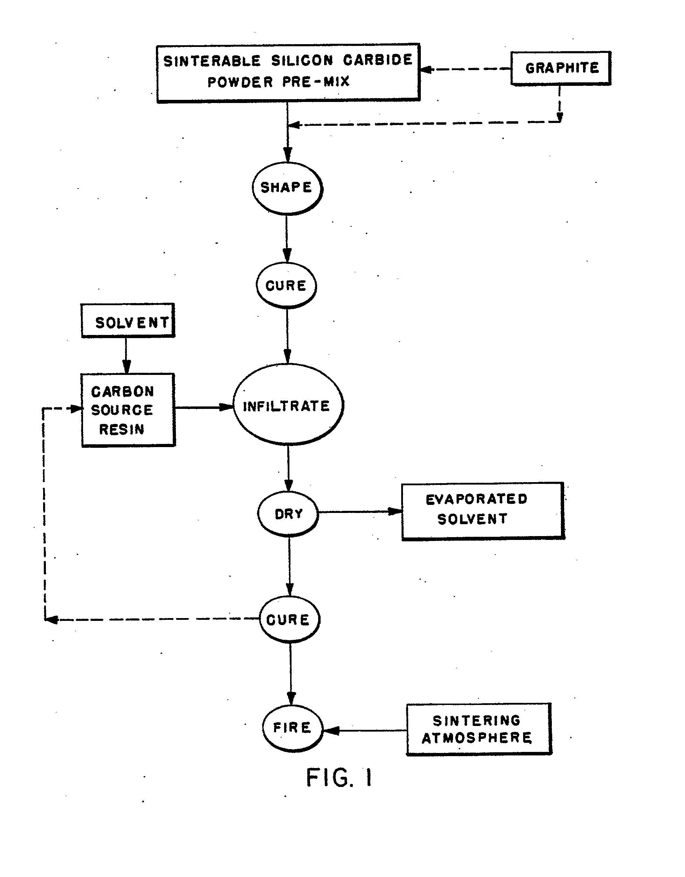

The process for producing a sintered silicon carbide/carbon composite ceramic body is illustrated schematically in Figure 1. The process preferably begins with mixing together the ingredients of the raw batch, namely from about 0.67 to about 17 percent by weight of organic material which can be coked to yield amorphous carbon; from about 0.15 to about 15 percent by weight of a sintering aid; and optionally up to 25 percent by weight of a temporary binder with the balance being silicon carbide powder and optionally from 1 to about 47 percent by weight graphite. Details of the formation of such pre-mix, with the exception of graphite, are disclosed in U.S. patent Nos. 4,179,299; 4,124,667; and 4,346,049. The amount of free silicon in the raw batch should not exceed about one percent. If a temporary binder, such as polyvinyl alcohol including a quantity of water is employed, the first mixing step preferably includes stirring the powdered materials (silicon carbide, graphite, organic material and sintering aid) together with the temporary binder and temporary binder vehicle prior to adding an organic solvent in which the organic material is soluble. In any event, after the organic solvent is added, the raw batch and organic solvent should be stirred in such a way as to disperse the organic solvent soluble, organic material which can be coked about the silicon carbide of the raw batch. This may be accomplished by stirring for at least about 5 minutes and preferably about 15 minutes. Alternatively, the ingredients may be dispersed by milling in a conventional ball mill or processing in a vibro-energy mill. Milling times up to 4 hours may have been employed without any negative effect on sintering (percent of theoretical density obtained). However, excessive milling may reduce the graphitic nature of the graphite and should be avoided. When an organic solvent soluble temporary binder is not employed, the mixing or milling may be conducted in the presence of an organic solvent such as acetone or heptane.

Following this mixing step, the mixture is dried in conventional manner by any suitable technique such as passing a quantity of drying gas, such as nitrogen, through or near the stirred mixture or by pan or spray drying of the mixture.

Following this drying step, the dried mixture is preferably screened so it will pass a 40 mesh and preferably a 60 to 80 mesh sieve (U.S. Standard).

When the carbon-containing additive or source is amorphous carbon, the mixing is preferably carried out in the presence of a temporary binder that is advantageously first dissolved in an organic solvent such as acetone or an aliphatic alcohol or alkane containing up to 7 carbon atoms.

The optional graphite powder may be added subsequent to the formation of a pre-mix which itself is formed by mixing together silicon carbide, amorphous carbon source, sintering aid, organic solvent and optionally temporary binder. The organic solvent is normally dried subsequent to formation of the pre-mix. The pre-mix is then broken up so it will pass a 40 mesh and preferably a 60-80 mesh U.S. standard sieve. If the pre-mix is not sufficiently broken up, upon shaping the resulting shaped body will not be sufficiently compacted and voids of excessive size will likely result. It is important that graphite, if used, be homogeneously distributed throughout the silicon carbide matrix. The optional graphite may be added prior to drying the pre-mix. When graphite is added to the previously dried pre-mix, an organic solvent may also be added to facilitate formation of a homogeneous mixture. The solvent is removed prior to shaping in the manner previously described.

Sintering aid can also be added by using pre-doped silicon carbide powder, pre-doped graphite powder, or by introduction into the resin which is to be charred to form amorphous carbon or into a plasticizer or temporary organic binder or a combination of any of these. Sintering aid can also be introduced in liquid form into the green body as in Canadian patent 1,139,791. Sintering aid can also be introduced by firing of the body being sintered within a graphite container that has been saturated with sintering aid by previous exposure to sintering aid at or about the temperature of sintering. Sintering aid may also be introduced during sintering in the form of a gas. Combinations of these techniques may be employed.

The level of sintering aid is provided within the body being sintered may be maintained by assuring that the partial pressure of sintering aid in the sintering atmosphere is equal to or greater than that within the body being sintered. A practical way to accomplish this is to enclose the body being sintered within a sealed container which is impervious to the aluminium, boron or beryllium of the sintering aid at sintering temperature and which has a volume approximating the size of the body being sintered. Alternate ways of introducing and maintaining an effective amount of sintering aid are described in U.S. Patent Nos. 4,172,109 and 4,080,415 now Reissue No. 30,386.

B. Shaping

Following the drying and sieving steps, the dried mixture is shaped in such a way as to produce a shaped object having interconnected micropores preferably having a density of at least about 45 percent of theoretical and preferably between about 50 and about 65 percent of theoretical. This shaping can be accomplished by any of a variety of techniques which are in themselves known, for example by extrusion, injection molding, transfer molding, casting, cold pressing, isostatic pressing or by die compression. When compression is used, suitable pressures are between about 8,000 and 25,000 psi and preferred pressures are between about 15,000 and 20,000 psi.

When a temporary binder is present, the temporary binder is preferably cured by heating the shaped object at an appropriate temperature below coking temperature for an appropriate time. This results in improved strength of the shaped object and thereby facilitates machining of the shaped object, if necessary, to attain the desired shape. For example, when the temporary binder is polyvinyl alcohol, it may be cured by heating the shaped object at a temperature of about 90°C to about 150°C for about 1 to about 2 hours. The shaped object may be easily machined, if desired, at this time.

C. Infiltrating

The shaped object is then infiltrated with an organic material such as those resins described hereinabove within subsection 1.D. which describes sources of amorphous carbon. Highly suitable resins are Plyophen™ resins which are phenol formaldehyde products and Resin B178, a B-stage resole phenolic resin. Infiltration may be accomplished by gradual immersion of the shaped object in the resin or resin solution or by gradual introduction of the infiltrant into a vessel containing the object to be infiltrated. Rapid complete immersion of the shaped object may result in disintegration due to rapid emergence of trapped air. The time required for complete infiltration by immersion at atmospheric pressure can be from one-half hour to a full day, depending upon viscosity of the infiltrant and cross-sectional thickness of the part to be infiltrated. Pressure or vacuum or a sequential application of these may be used to facilitate and accelerate complete infiltration of the resin or resin solution into the shaped object. Exposure of the shaped object to the infiltrating resin or resin solution is continued until the shaped object is completely saturated with the infiltrant. The amount of time for complete infiltration to be accomplished may be determined empirically as that time after which no further weight gain of the shaped object being infiltrated occurs. The amount of carbon to be added by infiltration of the shaped object is controlled by selection of the resin type (amount of char yield) and its concentration in a suitable solvent. Typically, the amount of resin or resin solution absorbed by the shaped object will yield carbon in an amount of from about 2 to about 25 percent.

After being infiltrated with a resin solution, the shaped object is dried to drive off the solvent used to carry the resin. When a pure resin is used as the infiltrant there exists no need to dry the infiltrated body and the infiltrated body may be taken directly to sintering, provided that slow heating rates, e.g. 100°C per hour are employed to coking temperature of that resin. If fast heating rates are to be employed, i.e. greater than 100°C per hour, it is advisable to cure the resin before entering the sintering cycle. Otherwise disintegration of the infiltrated object may occur due to rapid emission of gases upon decomposition of the infiltrant resin.

Additional infiltration cycles may be employed to increase the amount of carbon source material in the shaped object. When a resin solution is used as the infiltrant, a drying and curing step is preferably employed between each cycle to prevent or minimize extraction of that carbon source material previously deposited. Similarly, when a pure resin is employed as the infiltrant, if it is desired to maximize the amount of resin added, multiple cycles of infiltration with each being followed by a curing step may be employed. Curing may be accomplished by heating the infiltrated body to a temperature as recommended by the supplier of the resin but below that at which sintering of the infiltrated body occurs. Preferably the curing temperature employed is below that at which coking occurs although coking may be necessary in order to obtain highest levels of carbon addition. This curing temperature is typically of the order of 60-500°C. For the preferred carbon source materials this curing is accomplished in air at 80-150°C.

Another option is to partially sinter, then infiltrate the resulting shaped object which still contains interconnected micropores.

## D. Sintering

The shaped body is then fired to accomplish the densification necessary to produce a sintered silicon carbide/carbon or silicon carbide/ grahite/carbon composite ceramic body. Firing takes place from about 20 to about 180 minutes at temperatures of from about 1900 to about 2300°C. Lower temperatures are generally inoperable and higher temperatures cause sublimation of the silicon carbide material. The firing step can be carried out in a batch furnace or in a tube furnace wherein the shaped body is passed through the hot zone of the tube furnace to have a desired residence time at the desired temperature. Heating and cooling rates can vary widely depending upon furnace equipment and size and configuration of the parts to be sintered. The details of such a tube furnace are known in the prior art and are described, for example, in U.S. Patent 3,689,220 to P.A. Smudski. Firing is carried on in the absence of any externally applied pressure. particularly mechanical pressure, save that which may occur due to the presence of a gas at a pressure up to about one atmosphere. Such a firing or sintering process is referred to as being "pressureless". During pressureless sintering, the object being sintered is surrounded, usually in an inert container such as a graphite crucible, in up to about one atmosphere of pressure (101.33 kN/m$^2$) of an inert gas, a reducing gas, a vacuum or nitrogen. Reducing gases include hydrogen and carbon monoxide. Inert gases include the rare gases such as argon, helium, and neon. The gases in which the sintering operation is preferably carried out thus include inert gases and nitrogen and mixtures of these. Reducing gases are not recommended for achieving high sintered densities because some reactions with sintering aids resulting in formation of volatile compounds have been observed. Nitrogen, when utilized, enters into reaction in a minor way with the silicon carbide raw material. The use of nitrogen raises the necessary temperature for sintering about 150°C in comparison with processes utilizing inert gases such as argon, helium or neon. Nitrogen atmosphere is not recommended in combination with aluminum sintering aid because high density is not easily achieved. The firing can also be carried out under vacuum which, for purposes of this application, is defined as being 1 mm. of mercury or less.

A pressureless-sintered body is one in which the sintering process is effected in the absence of any externally applied pressure save that which may occur due to the presence of a gas at a pressure up to about one atmosphere (101.325 kN/m$^2$).

The presence of a continuous phase of silicon carbide in composite bodies is evidenced by a shrinkage in volume which occurs during initial firing of a preshaped object at sintering conditions. The amount of shrinkage decreases as the amount of carbon/graphite added increases. When a continuous silicon carbide phase is not formed, as for example, when too much graphite is present, such shrinkage does not occur upon firing at sintering conditions. The absence of a continuous silicon carbide phase will also be evidenced by a composite body having a very low resistance to rupture.

The resulting sintered composite body may exhibit some open porosity. The open porosity of the sintered composite body may be further reduced by infiltrating the sintered body with a carbon source resin and coking such resin in situ in a manner like that described hereinabove with respect to the shaped object. Extremely low open porosity can be obtained in this manner.

As used herein, "open porosity" means that which is determined by water saturation (ASTM C20-74).

Various aspects of the invention will now be illustrated with several examples.

Table I

| Sample No. | Raw Batch Carbon/ Source (net wgt %) | Raw Batch Graphite (wgt %) | Infiltrant Carbon (net wgt %) | Sintering Aid (wgt %/ Source) | Silicon Carbide (wgt %) | Sintering atm/ Temp (°C)/ time(hr)/ Fig No. | Reheating atm/ Temp/ time (hr)/ Fig. No. |
|---|---|---|---|---|---|---|---|
| 1 | 2/A | 0 | 0 | 0.5 (net B from $B_4C$) | 97.5 Grn | Ar/2150/.5/2 | Ar/2150/0.5/8 |
| 2 | 2/A | 3.0 | 0 | 0.5 (net B from $B_4C$) | 94.5 Grn | Ar/2150/.5/4 | Ar/2150/0.5/5 |
| 3 | 2/A | 4.5 | 0 | 0.5 (net B from $B_4C$) | 93.0 Grn | Ar/2150/.5/6 | Ar/2150/0.5/7 |
| 4 | 2/A | 8.0 | 0 | 0.5 (net B from $B_4C$) | 89.5 Grn | Ar/2150/.5/8 | Ar/2150/0.5/9 |
| 5 | 2/A | 5.0 | 0 | 0.5 (net B from $B_4C$) | 92.5 Grn | Ar/2150/.5/10 | |
| 6 | 2/A | 5.0 | 0 | 1.0 (net B from $B_4C$) | 92.0 Grn | Ar/2150/.5/11 | |
| 7 | 5/A | 0 | 0 | 0.5 (net B from $B_4C$) | 94.5 Grn | Ar/2150/.5/12 | |
| 8 | 10/B | 0 | 0 | 2.0 wgt % $AlB_2$ | 88.0 Grn | Ar/2150/.5/13 | |
| 9 | 2/A | 0 | 3.0 | 0.5 (net B from $B_4C$) | 94.5 Grn | Ar/2150/.5/ | |
| 10 | 2/A | 0 | 4.0 | 0.5 (net B from $B_4C$) | 93.5 Grn | Ar/2150/.5/ | |
| 11 | 2/A | 0 | 9 | 0.5 (net B from $B_4C$) | 90.5 Grn | Ar/2150/.5/ | |
| 12 | 2/A | 0 | 5 | 0.5 (net B from $B_4C$) | 94.5 Grn | Ar/2150/.5/ | |
| 13 | 2/A | 0 | 0 | 0.5 (net B from $B_4C$) | 97.5 Blk | $N_2$/2250/.5/ | |
| 14 | 2/A | 0 | 7 | 0.5 (net B from $B_4C$) | 92.5 Blk | $N_2$/2250/.5/ | |
| 15 | 2/A | 0 | 7 | 0.5 (net B from $B_4C$) | 92.5 Grn | $N_2$/2250/.5/ | |
| 16 | 2/A | 0 | 0 | 0.5 (net B from $B_4C$) | 97.5 Grn | $N_2$/2250/.5/ | |
| 17 | 2/A | 0 | 1.5 | 0.5 (net B from $B_4C$) | 98.0 Grn | Ar/2150/.5/14 | Ar/2150/.5/15 |
| 18 | 2/A | 0 | 3.4 | 0.5 (net B from $B_4C$) | 96.1 Grn | Ar/2150/.5/16 | Ar/2150/.5/17 |
| 19 | 2/A | 0 | 5.2 | 0.5 (net B from $B_4C$) | 94.3 Grn | Ar/2150/.5/18 | Ar/2150/.5/19 |
| 20 | 2/A | 0 | 5.6 | 0.5 (net B from $B_4C$) | 93.9 Grn | Ar/2150/.5/20 | Ar/2150/.5/21 |
| 21 | 2/A | 3.0 | 3.0 | 0.5 (net B from $B_4C$) | 91.5 Grn | Ar/2150/.5/22 | Ar/2150/.5/23 |
| 22 | 2/A | 0 | 0 | 0.5 (net B from $B_4C$) | 97.5 Grn | Ar/2150/0.5 | |
| 23 | 2/A | 0 | 2.0 | 0.5 (net B from $B_4C$) | 95.5 Grn | Ar/2150/0.5 | |
| 24 | 2/A | 0 | 4.0 | 0.5 (net B from $B_4C$) | 93.5 Grn | Ar/2150/0.5 | |

A = Plyophen 90–151
B = B 173

9

Table II

| Sample No. | Density (g/cc)/% of Theoretical | Fracture Toughness (MPa.m$^{1/2}$) | Sonic Modulus (10$^6$ psi) | Specific Electrical Resistivity (Ohm.cm) | MOR (10$^3$ psi) | Open Porosity (%) | Open Pore Radius (microns) | Microstructure Av Gr Size (microns)/Avg Aspect ratio Orig | Reheat | Electrical Discharge Machinability |
|---|---|---|---|---|---|---|---|---|---|---|
| 1 | 3.174/98.9 | 3.07 | 53.3 | 20.7 | 39.5 | 0 | not detected | 4.0/2.1 | 4.0/2.0 | unworkable |
| 2 | 3.074/97.0 | 3.46 | 50.9 | 77.5 | 39.4 | 1.23 | not detected | 2.7/2.3 | 3.2/1.4 | — |
| 3 | 3.001/97.0 | 4.23 | 47.8 | 2.94 | 46.3 | 0.81 | not detected | 2.4/1.8 | 2.4/1.9 | — |
| 4 | 2.793/90.0 | 4.18 | 36.9 | 0.0485 | 28.2 | 8.6 | 0.25-0.075 | 2.7/— | 2.6/1.7 | — |
| 5 | 3.030/96.5 | 4.79 | 48.3 | 1.51 | — | 0.05 | — | 2.7/1.9 | — | poor* |
| 6 | 3.030/96.4 | 3.57 | 49.4 | 1.73 | — | 1.18 | — | 3.0/1.8 | — | fair |
| 7 | 3.053/95.1 | 3.07 | 57.5 | 16.94 | — | 0.05 | — | 4.2/2.2 | — | — |
| 8 | 2.953/95.7 | 3.87 | 45.4 | 0.60 | — | 0.20 | — | 4.3/3.1 | — | good |
| 9 | 3.117/98.9 | | | 10.2 | | 0 | not detected | | | |
| 10 | 3.087/98.3 | | | 12.0 | | 0 | not detected | | | |
| 11 | | | | 0.0658 | | | | | | very good |
| 12 | | | | 5.44 | | | | | | |
| 13 | 3.178/98.8 | | | $3.74 \times 10^8$ | | | | | | |
| 14 | 3.043/94.6 | | | 4.34 | | | | | | |
| 15 | 2.994/93.1 | | | 1.96 | | | | | | |
| 16 | 3.170/98.5 | | | $3.3 \times 10^8$ | | 0 | | 3.1/1.9 | 3.1/2.0 | |
| 17 | 3.126/97.4 | | | | | 0 | | 2.6/1.7 | 3.0/2.0 | |
| 18 | 3.089/96.2 | | | | | 0 | | 2.3/1.6 | 2.5/1.8 | |
| 19 | 3.046/94.9 | | | | | 0 | | 2.1/1.6 | 2.5/1.6 | |
| 20 | 3.027/94.3 | | | | | 0 | | 2.7/2.0 | 3.0/2.1 | |
| 21 | 3.062/97.6 | | | 1.89 | | 0.04 | | | | |
| 22 | | | | | 39.47 | | | | | |
| 23 | | | | | 45.74 | | | | | |
| 24 | | | | | 45.03 | | | | | |

*Unexpected in view of sample 6

Examples 1-20

Silicon carbide powder having a specific surface area of 8-12 square meters/gram, a sintering aid as indicated in Table I, and Plyophen 90-151 phenol-formaldehyde resin (resin A) available from Reichold Chemicals Inc. or Varcum 8121 Resin (resin B) available from Varcum Chemical Company, Niagara Falls, NY, a division of Reichold Chemicals Inc., and one and a half weight percent polyvinyl alcohol were thoroughly mixed together, e.g. by milling in a ball mill having a plastic lined vessel containing silicon carbide grinding media in acetone or heptane. Upon completion of the mixing and drying cycle the mixture was such that it would pass through an 80 mesh U.S. Standard Sieve. At the end of the drying step there was only a faint trace of solvent smell and the material was dry to the touch. A portion of the dry raw batch powder was compressed at 14,000-16,000 psi (96530–110320 kN/m2) to achieve a green density above 50 percent. After pressing into a microporous shaped object, the shaped object was cured at about 80°C for 2 or more hours. Thereafter, the shaped object was placed into a vessel and an infiltrant solution gradually introduced. The infiltrant was either pure resin or a solution in water of Plyophentm 90-151 phenol-formaldehyde resin available from Reichold Chemicals Inc. The concentration of the solution was varied to control the amount of resin infiltrated. The calculated amount of carbon induced by the infiltrant is indicated in Table I. After completion of the infiltration step, the infiltrated object was dried and cured at 100 or more degrees centigrade. The infiltrated object was thereafter placed on a graphite setter tile. The infiltrated object was fed into a previously used tube furnace having a hot zone maintained at the temperature indicated in Table I below at a rate of about 1/4 to 1/2 inches (0.64 to 1.27 cm) per minute so that the required time to traverse the hot zone of the furnace was as given in Table I. The sintering atmosphere, whether an inert gas as the pressure specified or in a vacuum, was as indicated in Table I. After sintering, the densified body was held for about 20 minutes in a cooling chamber to avoid thermal shock. After the sintered body had cooled, its physical and mechanical properties were observed to be as indicated in Table II.

Samples 1 through 8 were prepared in substantially identical manner and show the effect of varying the type and amount of various ingredients. Samples 9 through 21 were prepared in a manner similar to that of samples 1 through 8 except that a spray-dried mixture of silicon carbide powder Plyophentmresin, B4C sintering aid, 1 1/2 percent PVA and 1 1/2 percent polyethylene glycol were employed to form a microporous shaped object that was subsequently infiltrated with carbon source resin. Infiltration was accomplished by immersion of the shaped object(s) for each sample in pure resin or a solution of resin at atmospheric pressure, depending on the amount of carbon desired to be added by infiltration. Sintering conditions were as nearly identical as possible to achieve with presently available equipment which consisted of an electrical resistance heated tube furnace as described in U.S. Patent 3,689,220. The sintering times given throughout are approximations as there can be no exact time given for the type of furnace employed because the hot zone and its boundary regions are a continuum.

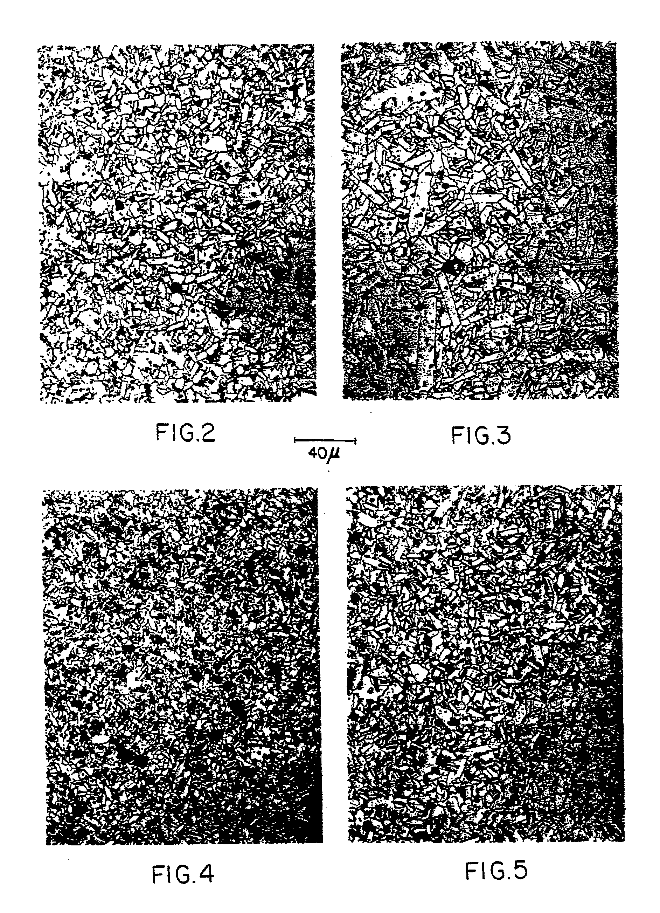

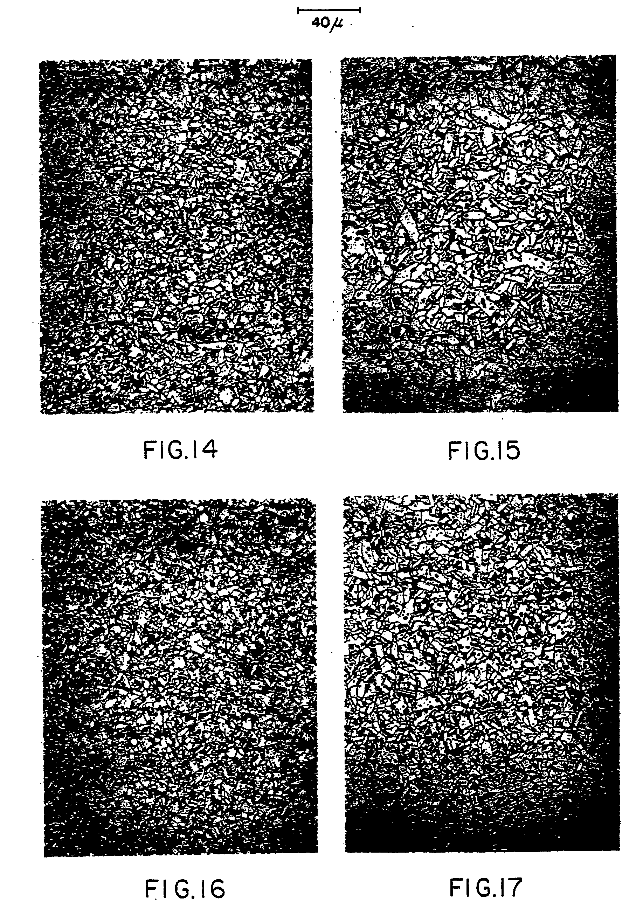

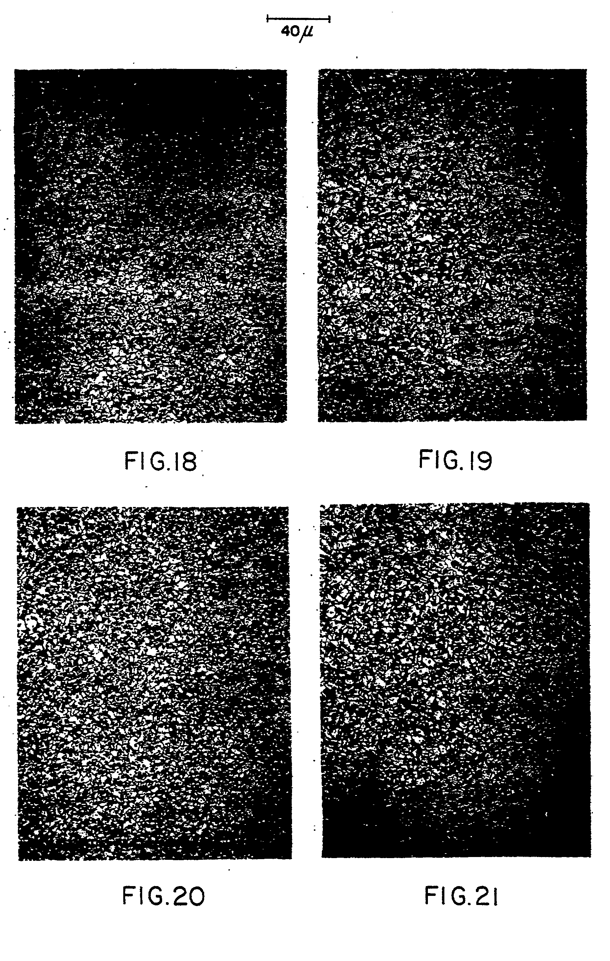

Samples 1 and 9 through 20 demonstrate the influence of various amounts of carbon added by infiltration of the microporous shaped body while maintaining constant the amount and type of amorphous carbon source resin and the amount and type of sintering aid in the shaped object being infiltrated. When the microstructures of samples 1 and 17 through 20 as shown in Figures 2, 14, 16, 18, 20 are compared with one another, it is seen that those samples containing infiltrant carbon exhibit a finer microstructure. Also, when Samples 17 through 20 as shown in Figures 15, 17, 19, 21 are compared to sample 1 as shown in Figure 3 after reheating by passing them a second time through the sintering cycle, it is observed that less grain growth occurs in those samples containing carbon added by infiltration.

Samples 2, 3, 5, 7, 9, 10, 12, 18, 19 and 21 demonstrate the influence of varying the amount of carbon source resin, graphite or other carbon source in the shaped object while maintaining total carbon content at between about five and about eight percent respectively and at constant sintering aid type and amount. As shown in the photomicrographs corresponding to these samples as identified in Table I, respectively, and in Table II the grain size and aspect ratio of samples 2, 3, 5, 7 was not greatly influenced at these low total carbon levels; however, the inclusion of infiltrant carbon in each instance lowered the average grain size and electrical resistance. As shown by sample 20, infiltration with pure resin resulted in an even higher total uncombined carbon content than in samples 17 through 19 and an even finer polycrystalline microstructure.

Comparison of samples 2 and 18, both of which contain a total carbon content of about 5 percent, indicates that carbon addition by infiltration results in a finer, more uniform microstructure than addition of a comparable amount of graphite powder. This observation is confirmed by comparison of samples 5 and 19, both of which contain a total carbon content of about 7 percent. The infiltrated samples exhibit lower open porosity at the same total carbon content.

Specific electrical resistivity of samples 1 through 16 and 21 was measured on bars of the same size and configuration (2 x 1/4 x 1/8 inches) (5.08 x 0.64 x 0.32 cm). The data provided in Table II was obtained using a two point test method. The results given in Table II indicate that when a certain carbon level is reached, additional carbon greatly influences the resistivity of the sintered product. In this regard, compare samples 9, 10 and 14, 15 with 11, and 1, 2, 3 and 5 with 4. It is unexpected that relatively small increases in the amount of carbon could effect large decreases in electrical resistivity and that the relationship is clearly non-linear.

The specific electrical resistivity of a silicon carbide/carbon composite body is influenced by the total carbon level, the manner and type of carbon addition, the amount and type of sintering aid and the sintering atmosphere. Samples of similar composition sintered in nitrogen exhibit much higher resistivity than those sintered in argon, as demonstrated by comparison of results for samples 1 and 13 and samples 5 and 14. Comparison of samples 13 and 16 indicates that the type of silicon carbide powder has a minor influence. This is reinforced by comparison of samples 14 and 15. In each instance, the use of green color silicon carbide exhibited somewhat lower electrical resistivity than use of black color silicon carbide. Black color silicon carbide normally contains from about 0.1 to about 0.5 percent aluminum in solid solution as an impurity; green color silicon carbide contains no or very little aluminum.

Attempts were made to electrical-discharge machine samples 1, 5, 6, 8 and 11. The results are reported in Table II. The comparative performance of samples 1 and 11 establishes that infiltrant carbon aids in rendering sintered silicon carbide/carbon composites electrical-discharge machineable as well as providing composites having a very fine grain microstructure.

Fracture toughness and sonic modulus were tested on pressureless sintered discs of varying composition as shown in Table III.

Table III

| Sample No. | Infiltrant Carbon (Net wgt %) | Density (g/cc) | Fracture Toughness (MPa · m$^{1/2}$) | Sonic Modulus (10$^6$ psi) |
|---|---|---|---|---|
| 25 | 0 | 3.174 | 3.77 | 59.4 |
| 26 | 1 | 3.160 | 3.91 | 58.6 |
| 27 | 2 | 3.147 | 4.17 | 58.3 |
| 28 | 3 | 3.135 | 4.50 | 57.8 |
| 29 | 4 | 3.128 | 4.71 | 55.6 |

Sample 25 is of a composition comparable to sample 1, Table II; samples 26-29 are according to the invention. All discs used in obtaining this data were made from a raw batch composition like that used to make sample 1 of Tables I and II. After shaping, the discs were infiltrated with varying concentrations of Resin A, as identified in Table I, cured and sintered. The results obtained indicate, as infiltrated carbon level increases from 0 to 4 percent, that sonic modulus decreases and fracture toughness increases as the infiltrated carbon level increases. Fracture toughness was measured using Vickers apparatus, a load of 5.0 Kg, an impact velocity of 0.3 mm/second and an acting period of 15 second.

Sonic modulus decreases with increasing graphite amount as indicated upon comparison of samples 1-6, Table II. Fracture toughness increases upon the addition of graphite as shown in samples 1-6, Table II.

"Grain size." as the term is used herein, means the maximum length straight line that can be contained within the borders of a grain as it appears on a plane surface of a polished specimen or a photomicrograph of such a specimen (area basis).

"Area basis," as the term is used herein, means as it appears or is derived from a plane surface of a polished specimen or a photomicrograph of such a specimen.

"Average grain size," as the terms is used herein, means the arithmetic mean grain size of those grains observed on microscopic examination of a photomicrograph of a polished specimen of interest. Average grain size as reported in Table II was determined by the following linear intercept procedure.

A standard of known length is placed on a photomicrograph of the sample. The number of grains intercepted by the reference edge of the standard is determined. The length of the standard is divided by the number of grains. This quotient is then divided by the magnification to yield directly the average grain size in microns. A plurality of lines are used and averaged to neutralize any directionality.

"Aspect ratio," as the term is used herein, means the ratio of the maximum lineal dimension of a grain of the crystal microstructure to the minimum lineal dimension of a grain of the crystal microstructure on an area basis. A spherical grain would have an aspect ratio of 1. The product of the present process is characterized in part by its silicon carbide matrix being formed on an area basis predominantly of grains that have an aspect ratio of less than about 3.

"Average aspect ratio" as reported in Table II was determined by dividing the photomicrograph format into an eight by ten matrix of equally-sized squares. Random numbers were then generated for these squares and employed to choose five squares. A template of the size of the photomicrographs was provided with a matrix. For each chosen square, a circle of the maximum size capable of fitting within one square was cut resulting in a template having five equal-sized randomly chosen holes. The template was placed on each photomicrograph and each of the exposed areas examined under magnification. For each of the five circles, the worst (largest and highest aspect ratio) grain which extended into or was contained within was singled out and its aspect ratio determined. For each of the five circles, a typical grain exclusive of the worst grain was selected and its aspect ratio determined. The results reported in Table II represent the average of the five worst grains and five typical grains selected for each sample's photomicrograph. Thus, the values given are weighted toward the worst grain for each sample. "Average aspect ratio" is not to be confused with or substituted for "aspect ratio" in interpreting the following claims.

Modulus of Rupture (MOR) was determined using a four-point bending technique employing a long span of 1 1/2 inches (3.81 cm) and a short span of 1/2 inch (1.27 cm) (ASTM C651-70). The test bars were of 2 x 1/4 x 1/8 inches (0.64 x 0.32 cm) size.

## Claims

1. A process for producing a sintered silicon carbide/carbon composite ceramic body comprising:

a. forming a homogeneous mixture comprising the components of:

(1) a carbon-containing additive selected from the group consisting of amorphous carbon, and a solvent soluble, organic material which can be coked at temperatures below about 1000°C to form amorphous carbon or mixtures thereof, in an amount between 0.5 and 5 percent by weight of uncombined carbon;

(2) from about 0.15 to about 15 percent by weight of a sintering aid selected from the group consisting of aluminum, beryllium or boron or compounds containing any one or more of these elements or a mixture of any of the foregoing elements or compounds, said sintering aid containing from about 0.15 to about 5 percent by weight of aluminum, boron or beryllium or a mixture of any of these elements;

(3) up to about 25 percent by weight of organic temporary binder;

(4) a balance of silicon carbide powder having a surface area of from about 5 to about 100 square meters per gram;

b. shaping the mixture in such a way as to produce a microporous shaped object having a density of at least about 45 percent of theoretical; and

c. infiltrating the shaped object with a sufficient amount of an organic material which can be coked at temperatures below sintering temperature to form amorphous carbon, in an amount between about 1 and 25 percent by weight of the shaped object;

d. firing the infiltrated object in a vacuum or in an atmosphere substantially free of silicon vapour and inert to silicon carbide in the absence of any substantial externally applied pressure under such conditions of time and temperature at a temperature of between about 1900°C and 2300°C until a sintered body having a homogeneous microstructure of silicon carbide grains having a maximum size of about 5 micrometers, said microstructure having carbon substantially uniformly dispersed throughout, is formed.

2. A process according to claim 1, characterised in that from about 0.5 to about 17 percent by weight of a solvent-soluble, organic material which can be coked and has a carbon content of from about 25 to about 75 percent by weight of the organic material is employed in forming the homogeneous mixture which further includes from about 25 to about 100 percent of the combined weight of the silicon carbide powder, graphite powder, organic material which can be coked, sintering aid and temporary binder, of a solvent in which the organic material which can be coked is soluble; said mixing being done in such a way as to disperse the organic material which can be coked about the silicon carbide powder and graphite powder and to coat the silicon carbide powder and graphite powder therewith, and drying the mixture in such a way as to evaporate the solvent therefrom prior to shaping.

3. A process according to claim 1 or 2, characterised in that the silicon carbide of the raw batch is predominately alpha, non-cubic crystalline silicon carbide.

4. A process according to claim 1 or 2, characterised in that the silicon carbide of the sintered composite body is predominately alpha, non-cubic crystalline silicon carbide.

5. A process according to any one of the preceding claims, characterised in that the body is fired for a time varying from about 10 to about 180 minutes; wherein the temperature is between about 1900°C and 2300°C; and said conditions of atmosphere are firing in a vacuum or up to about one atmosphere of pressure of a gas selected from the group consisting of nitrogen, argon, helium, neon and mixtures thereof.

6. A process according to any one of the preceding claims, characterised in that the level of sintering aid provided in the object being sintered is maintained by enclosing the object being sintered within a sealed container which is impervious to the aluminum, boron or beryllium of the sintering aid at the sintering temperature and which has a volume approximating the size of the object being sintered.

7. A process according to any one of claims 1 to 5, characterised in that the level of aluminum, boron, or beryllium to be derived from the sintering aid and retained in the object being sintered is maintained by containing the object being sintered within a graphite container, which container has been saturated with the sintering aid or elemental aluminum, beryllium or boron by previous exposure to the sintering aid of aluminum, beryllium or boron at or about the temperature of sintering.

8. A process according to claim 1, characterised by the steps of:

a. forming a homogeneous mixture by mixing together the components of

(1) from about 91 to about 99.35 parts by weight silicon carbide having a surface area of from about 5 to about 100 square meters/gram;

(2) from about 0.67 to about 17 parts by weight of organic material which can be coked at temperatures below about 1000°C to provide amorphous carbon and having a carbon yield of from about 25 to about 75 percent by weight;

(3) from about 0.15 to about 15 percent by weight of a sintering aid selected from the group consisting of any one or more of these elements or a mixture of any of the foregoing elements or compounds, said sintering aid containing from about 0.15 to about 5 parts by weight of aluminum, beryllium or boron or a mixture of any of these elements;

(4) temporary binder in amount up to 25 percent by total combined weight of the silicon carbide powder, organic material which can be coked and sintering aid; and

EP 0 178 753 B1

(5) from about 24 to about 100 percent by total weight of the silicon carbide powder, organic material which can be coked, sintering aid and temporary binder of a solvent in which the organic material is soluble; said mixing being done in such a way as to disperse the organic material about the silicon carbide powder and coat the silicon carbide powder therewith;

b. drying the mixture in such a way as to evaporate the solvent from the mixture;

c. breaking up the dried mixture so that it will pass a 40 mesh sieve;

d. adding graphite powder having an average particle size not in excess of 8 micrometers and a surface area of at least 5 square metres par gram to the mixture in an amount sufficient to bring the percent by weight of graphite in the resulting mixture in the range of from about 1 to about 48 percent and mixing the graphite powder and the mixture in such a way to disperse the graphite powder substantially homogeneously throughout the resulting graphite-containing mixture; and

e. shaping the graphite-containing mixture in such a way as to produce a microporous shaped object having a density of at least about 50 percent of theoretical.

9. A process for producing sintered silicon carbide/carbon composite ceramic body according to claim 8, characterised in that the mixture comprises from about 0.3 to about 5 parts by weight of $B_xC$ wherein "x" is from 2 to 8, said BxC containing from about 0.3 to about 3.0 percent by weight boron.

10. A process according to claim 1, characterised in that forming a homogeneous mixture referred to in step a. comprises:

i. dissolving an organic material which can be coked in a solvent; and

ii. mixing the solution so formed with the remaining components, and drying of the mixture prior to shaping.

11. A process according to any one of claims 1 to 7, characterised in that the temporary binder is used in an amount of from about 1.5 to 5 percent.

12. A process according to claim 8 or 9, characterised in that the temporary binder is curable, and comprising a step of curing the temporary binder after shaping of the dried mixture but prior to firing of the shaped object.

13. A process according to claim 1, characterised in that the shaped object is infiltrated with a phenol-formaldehyde resin and the infiltrated object is thereafter heated to a temperature of about 90°C to about 150°C for about 1 to about 2 hours to cure the resin infiltrant.

14. A process according to claim 8, 9 or 12, characterised in that the shaped body is fired for from about 20 to about 180 minutes at a temperature of from about 2100°C to about 2300°C and in up to about one atmosphere (101.33 kN/m²) of pressure of a gas selected from the group consisting of argon, helium, neon, nitrogen and mixtures thereof.

15. A process according to claim 14, characterised in that the gas is approximately one atmosphere (101.33 kN/m²) of the member selected from the group consisting of argon, helium and neon and the temperature is from about 2050° to about 2200°C.

16. A process according to claim 8, 9, 12 or 14, characterised in that the silicon carbide comprises predominately alpha, non-cubic crystalline silicon carbide.

17. A process according to claim 1, characterised in that the shaped object is infiltrated with an aqueous solution containing from 25 to 100 percent by weight of a phenol-formaldehyde resin having a char yield of about 40 percent by weight.

18. A process according to claim 1, characterised in that the resin that has been infiltrated into the shaped object is cured and subsequently the infiltration cycle is repeated.

19. A process according to claim 1, characterised in that wherein the sintered composite body is infiltrated with a carbon source resin and subsequently reheated to coke the resin in situ.

**Patentansprüche**

1. Verfahren zur Herstellung gesinterter Verbundkeramiken aus Siliciumcarbid und Kohlenstoff durch folgende Verfahrensschritte:

a) es wird ein homogenes Gemisch gebildet aus den Komponenten:

1. einem kohlenstoffhaltigen Zusatz in Form von amorphem Kohlenstoff und/oder einem Lösungsmittel-löslichen organischen Stoff, der bei Temperaturen unter etwa 1000°C zu amorphem Kohlenstoff verkokt werden kann, in einer Menge von 0,5 bis 5 Gew.-% freien Kohlenstoffs;

2. etwa 0,15 bis etwa 15 Gew.-% eines Sinterhilfsmittels in Form von Aluminium, Beryllium und/oder Bor bzw. deren Verbindungen, wobei eine oder mehrere dieser Elemente oder Verbindungen vorhanden sein können, und das Sinterhilfsmittel etwa 0,15 bis etwa 5 Gew.-% Aluminium, Bor und/oder Beryllium aufweist;

3. bis etwa 25 Gew.-% eines organischen temporären Bindemittels und

4. Rest Siliciumcarbidpulver mit einer spezifischen Oberfläche von etwa 5 bis etwa 100 m²/g, hergestellt,

b) das Gemisch wird zu einem mikroporösen Formkörper mit einer Dichte von zumindest etwa 45% der Theorie geformt und

c) der Formkörper wird mit einer ausreichenden Menge eines organischen Materials, welches bei Temperaturen unter der Sintertemperatur unter Bildung von amorphem Kohlenstoff zu verkoken ver-

14

mag, in einer Menge von etwa 1 und 25 Gew.-% – bezogen auf den Formkörper – imprägniert und schließlich wird

d) der imprägnierte Körper im Vakuum oder in einer im wesentlichen von Siliciumdampf und inerten Stoffen freien Atmosphäre zu Siliciumcarbid in Abwesenheit von einem im wesentlichen äußerlich aufgebrachten Druck während einer solchen Zeit und bei einer solchen Temperatur zwischen etwa 1900 und 2300°C gebrannt, bis ein Sinterkörper mit einem homogenen Mikrogefüge von Siliciumcarbidkorn mit maximaler Größe von etwa 5 μm, in welchem Kohlenstoff im wesentlichen gleichmäßig dispergiert ist, gebildet ist.

2. Verfahren nach Anspruch 1, dadurch gekennzeichnet, daß etwa 0,5 bis etwa 17 Gew.-% eines Lösungsmittel-löslichen organischen Stoffs, der verkokbar ist und einen Kohlenstoffgehalt von etwa 25 bis etwa 75 Gew.-% hat, für das homogene Gemisch verwendet wird, welches darüber hinaus etwa 25 bis etwa 100% der Summe der Gewichte von Siliciumcarbidpulver, Graphitpulver, organischem verkokbarem Stoff, Sinterhilfsmittel und temporärem Bindemittel an einem Lösungsmittel enthält, in welchem der verkokbare organische Stoff löslich ist, und das Mischen in der Weise erfolgt, daß der organische verkokbare Stoff über das Siliciumcarbidpulver und Graphitpulver dispergiert wird und diese Pulver damit überzogen werden worauf das Gemisch derart getrocknet wird, daß das Lösungsmittel von der Formgebung abgedampft wird.

3. Verfahren nach Anspruch 1 oder 2, dadurch gekennzeichnet, daß das Siliciumcarbid des Ausgangsmaterials in der Hauptsache nicht-kubisch kristallisiertes α-Siliciumcarbid ist.

4. Verfahren nach Anspruch 1 oder 2, dadurch gekennzeichnet, daß das Siliciumcarbid des Sinterkörpers in der Hauptsache nicht-kubisch kristallisiertes α-Siliciumcarbid ist.

5. Verfahren nach einem der vorhergehenden Ansprüche, dadurch gekennzeichnet, daß der Körper in einer Zeit von etwa 10 bis etwa 180 min bei einer Temperatur zwischen etwa 1900°C und 2300°C gebrannt wird und das Brennen im Vakuum oder in einer Atmosphäre bis auf einen Druck von 1 bar aus Stickstoff, Argon, Helium, Neon oder deren Gemische erfolgt.

6. Verfahren nach einem der vorhergehenden Ansprüche, dadurch gekennzeichnet, daß der Anteil an Sinterhilfsmittel in dem zu sinternden Formkörper aufrechterhalten wird, indem der zu sinternde Körper in einem Behälter eingeschlossen wird, welcher gegenüber Aluminium, Bor und/oder Beryllium aus dem Sinterhilfsmittel bei Sintertemperatur undurchlässig ist und ein Volumen etwa entsprechend der Größe des zu sinternden Körpers besitzt.

7. Verfahren nach einem der Ansprüche 1 bis 5, dadurch gekennzeichnet, daß der Anteil an Aluminium, Bor und/oder Beryllium aus dem Sinterhilfsmittel in dem zu sinternden Formkörper erhalten wird, indem das Sintern in einem Graphitbehälter, der mit dem Sinterhilfsmittel oder elementarem Aluminium, Beryllium oder Bor gesättigt ist, stattfindet, welcher vorher bei der oder etwa bei der Sintertemperatur dem Sinterhilfsmittel auf der Basis von Aluminium, Beryllium oder Bor ausgesetzt worden ist.

8. Verfahren nach Anspruch 1, gekennzeichnet durch folgende Verfahrensschritte:

a) es wird ein homogenes Gemisch hergestellt aus den Komponenten

1. etwa 91 bis etwa 99,35 Gew.-Teile Siliciumcarbid mit einer spezifischen Oberfläche von etwa 5 bis etwa 100 m²/g;

2. etwa 0,67 bis etwa 17 Gew.-Teilen organischer Stoff, der bei einer Temperatur unter etwa 1000°C unter Bildung von amorphem Kohlenstoff verkokbar ist und eine Kohlenstoffausbeute von etwa 25 bis etwa 75 Gew.-% zu liefern vermag;

3. etwa 0,15 bis etwa 15 Gew.-% eines Sinterhilfsmittels in Form obiger Elemente und/oder Verbindungen, wobei das Sinterhilfsmittel etwa 0,15 bis etwa 5 Gew.-Teile Aluminium, Beryllium und/oder Bor enthält;

4. temporäres Bindemittel in einer Menge bis 25% – bezogen auf das Gesamtgewicht von Siliciumcarbidpulver, verkokbarem organischem Stoff und Sinterhilfsmittel- und

5. etwa 24 bis etwa 100% des Gesamtgewichts von Siliciumcarbidpulver, verkokbarem organischem Stoff, Sinterhilfsmittel und temporärem Bindemittel eines Lösungsmittels für den organischen Stoff, wobei das Mischen derart erfolgt, daß der organische Stoff über das Siliciumcarbidpulver verteilt ist und dieses überzieht, worauf

b) das Gemisch unter Verflüchtigung des Lösungsmittels getrocknet,

c) das trockene Gemisch auf eine Korngröße unter 40 mesh gebrochen wird und

d) Graphitpulver mit einer mittleren Größe nicht über 8 μm und einer spezifischen Oberfläche von zumindest 5 m²/g in einer solchen Menge zugesetzt wird, daß der Gewichtsanteil Graphit im erhaltenen Gemisch etwa 1 bis etwa 48% beträgt und das Einmischen von Graphitpulver in das Gemisch derart erfolgt, daß das Graphitpulver darin im wesentlichen homogen verteilt wird, worauf schließlich

e) das graphithaltige Gemisch in der Weise geformt wird, daß ein mikroporöser Formkörper mit einer Dichte von zumindest etwa 50% der Theorie gebildet wird.

9. Verfahren zur Herstellung von gesinterten Verbundkeramiken auf der Basis von Siliciumcarbid und Kohlenstoff nach Anspruch 8, dadurch gekennzeichnet, daß das Gemisch etwa 0,3 bis etwa 5 Gew.-Teile $B_XC$ enthält, wobei «X» 2 bis 8 sein kann und das $B_XC$ etwa 0,3 bis etwa 3 Gew.-% Bor enthält.

10. Verfahren nach Anspruch 1, dadurch gekennzeichnet, daß die Bildung der homogenen Mischung nach der Verfahrensstufe a)

i. ein Lösen des organischen verkokbaren Stoffs in einem Lösungsmittel und

ii. Mischen der Lösung mit den restlichen Komponenten und Trocknen des Gemischs vor der Formgebung umfaßt.

11. Verfahren nach einem der Ansprüche 1 bis 7, dadurch gekennzeichnet, daß das temporäre Bindemittel in einer Menge von etwa 1,5 bis 5% angewendet wird.

12. Verfahren nach Anspruch 8 oder 9, dadurch gekennzeichnet, daß das temporäre Bindemittel härtbar ist und nach dem Formen des trockenen Gemischs, jedoch vor dem Brennen des Formkörpers, das temporäre Bindemittel gehärtet wird.

13. Verfahren nach Anspruch 1, dadurch gekennzeichnet, daß der Formkörper mit einem Phenolformaldehydharz imprägniert wird und der imprägnierte Körper auf eine Temperatur von etwa 90°C bis etwa 150°C während etwa 1 bis etwa 2 h zur Härtung des infiltrierten Phenolformaldehydharzes gehalten wird.

14. Verfahren nach Anspruch 8, 9 oder 12, dadurch gekennzeichnet, daß der Formkörper etwa 20 bis 180 min bei etwa 2100°C bis etwa 2300°C bei einem Druck bis etwa 1 bar (101,33 kN/m²) eines Gases aus Argon, Helium, Neon, Stickstoff oder deren Gemische gebrannt wird.

15. Verfahren nach Anspruch 14, dadurch gekennzeichnet, daß die Gasatmosphäre von etwa 1 bar (101,33 kN/m²) aus Argon, Helium und Neon besteht und die Sintertemperatur bei etwa 2050°C bis etwa 2200°C liegt.

16. Verfahren nach Anspruch 8, 9, 12 oder 14, dadurch gekennzeichnet, daß das Siliciumcarbid in erster Linie nicht-kubisch kristalliertes α-Siliciumcarbid enthält.

17. Verfahren nach Anspruch 1, dadurch gekennzeichnet, daß der Formkörper mit einer wäßrigen Lösung, enthaltend 25 bis 100 Gew.-% eines Phenolformaldehydharzes mit einer Koksausbeute von etwa 40 Gew.-%, imprägniert wird.

18. Verfahren nach Anspruch 1, dadurch gekennzeichnet, daß das in den Formkörper infiltrierte Harz gehärtet wird und anschließend noch einmal eine Imprägnierung stattfindet.

19. Verfahren nach Anspruch 1, dadurch gekennzeichnet, daß der Sinterkörper mit einem Harz als Kohlenstoffquelle imprägniert wird und anschließend zur in situ-Zersetzung des Harzes zu Koks erhitzt wird.

## Revendications

1. Procédé pour la production d'un corps composite céramique fritté en carbure de silicium/carbone, comprenant

a. formation d'un mélange homogène comprenant les composants:

(1) additif contenant du carbone, choisi dans le groupe constitué par le carbone amorphe, et un solvant soluble, une matière organique qui peut être cokéfiée à des températures inférieures à environ 1000°C pour former du carbone amorphe ou des mélanges avec celui-ci, en une proportion comprise entre 0,5 et 5% en poids de carbone non combiné;

(2) entre environ 0,15 et environ 15% en poids d'un agent de frittage choisi dans le groupe constitué par l'aluminium, le beryllium ou le bore ou les composés contenant l'un quelconque de ces éléments ou un mélange de l'un quelconque des éléments ou composés précédents, ledit agent de frittage contenant d'environ 0,15 à environ 15% en poids d'aluminium, de bore ou de beryllium ou un mélange de ces éléments;

(3) jusqu'à environ 25% en poids de liant organique temporaire;

(4) le reste étant du carbure de silicium en poudre ayant une surface spécifique d'environ 5 à environ 100 m²/g;

b. façonnage du mélange de manière à obtenir un objet formé microporeux ayant une densité d'au moins environ 45% de la théorie; et

c. infiltration de l'objet formé avec une quantité suffisante de matière organique qui peut être cokéfiée à des températures inférieures à la température de frittage pour former du carbone amorphe, en une proportion comprise entre environ 1 et environ 25% en poids de l'objet formé;

d. cuisson de l'objet infiltré sous vide ou sous une atmosphère essentiellement exempte de vapeur de silicium et de carbure de silicium inerte, en l'absence de toute pression notable appliquée de l'extérieur, dans ces conditions de durée et de température, à une température comprise entre environ 1900°C et 2300°C, jusqu'à obtention d'un corps fritté ayant une microstructure homogène de grains en carbure de silicium ayant une taille maximale d'environ 5 micromètres, ladite microstructure ayant des carbones dispersés de manière essentiellement uniforme.

2. Procédé selon la revendication 1, caractérisé en ce qu'environ 0,5 à environ 17% en poids d'une matière organique soluble dans un solvant, qui peut être cokéfiée et présente une teneur en carbone d'environ 25 à environ 75% en poids de la matière organique, est utilisée dans la formation du mélange homogène qui comprend en outre d'environ 25 à environ 100% du poids combiné de la poudre de carbure de silicium, de la poudre de graphite, de la matière organique qui peut être cokéfiée, de l'agent de frittage et du liant temporaire, d'un solvant dans lequel la matière organique qui peut être cokéfiée est soluble; ledit mélangeage étant effectué de façon à disperser la matière organique qui peut être cokéfiée sur la poudre de carbure de silicium et la poudre de graphite et de façon à enrober la poudre de carbure de silicium et la poudre de graphite avec cette matière, et le séchage du mélange étant effectué de manière à évaporer le solvant avant le formage.

3. Procédé selon la revendication 1 ou 2, caractérisé en ce que le carbure de silicium de la charge brute est essentiellement du carbure de silicium cristallin alpha, non cubique.

4. Procédé selon la revendication 1 ou 2, caractérisé en ce que le carbure de silicium du corps composite fritté est essentiellement du carbure de silicium cristallin alpha, non cubique.

5. Procédé selon l'une quelconque des revendications précédentes, caractérisé en ce que le corps est recuit pendant une durée variant d'environ 10 à envrion 180 minutes; la température étant comprise entre environ 1900°C et 2300°C; et lesdites conditions d'atmosphère étant la cuisson sous vide ou sous une pression allant jusqu'à environ 1 atmosphère d'un gaz choisi dans le groupe constitué par l'azote, l'argon, l'hélium, le néon et leurs mélanges.

6. Procédé selon l'une quelconque des revendications précédentes, caractérisé en ce que la proportion d'agent de frittage prévue dans l'objet soumis au frittage est maintenue par disposition de l'objet soumis auf frittage dans un récipient fermé de manière étanche qui est imperméable à l'aluminium, au bore ou au beryllium de l'agent de frittage à la température de frittage, et qui a un volume approchant de la taille de l'objet soumis auf frittage.

7. Procédé selon l'une quelconque des revendications 1 à 5, caractérisé en ce que la proportion en aluminium, bore ou beryllium devant provenir de l'agent de frittage et retenue dans l'objet soumis au frittage est maintenue par le fait que l'objet est disposé dans un récipient en graphite, ce récipient ayant été saturé en agent de frittage ou en aluminium, beryllium ou bore élémentaires, par exposition préalable à l'agent de frittage en aluminium, beryllium ou bore, à la température de frittage ou environ à cette température.

8. Procédé selon la revendication 1, caractérisé par les étapes de:

a. formation d'un mélange homogène en mélangeant entre eux les composants suivants:

(1) d'environ 91 à environ 99,35 parties en poids de carbure de silicium ayant une surface spécifique d'environ 5 à environ 100 m²/g:

(2) d'environ 0,67 à environ 17 parties en poids de matière organique qui peut être cokéfiée à des températures inférieures à environ 1000°C pour produire du carbone amorphe et ayant un rendement en carbone d'environ 25 à environ 75% en poids;

(3) d'environ 0,15 à environ 15% en poids d'un agent de frittage choisi dans le groupe constitué par l'un quelconque ou plusieurs de ces éléments ou un mélange de l'un quelconque ou plusieurs des éléments ou composés précédents, ledit agent de frittage contenant d'environ 0,15 à environ 5 parties en poids d'aluminium, de beryllium ou de bore, ou un mélange de l'un quelconque de ces éléments;

(4) un liant temporaire en une proportion allant jusqu'à 25% du poids total combiné de la poudre de carbure de silicium, de la matière organique pouvant être cokéfiée et de l'agent de frittage; et

(5) d'environ 24 à environ 100% du poids total de la poudre de carbure de silicium, de la matière organique pouvant être cokéfiée, de l'agent de frittage et du liant temporaire, d'un solvant dans lequel la matière organique est soluble; ledit mélangeage étant effectué de manière à disperser la matière organique sur la poudre de carbure de silicium et à enrober la poudre de carbure de silicium avec cette matière;

b. séchage du mélange de manière à évaporer le solvant du mélange;

c. broyage du mélange séché de manière qu'il traverse un crible d'une ouverture de 40 mesh;

d. addition au mélange de poudre de graphite ayant une taille moyenne des particules ne dépassant pas 8 micromètres et une surface spécifique d'au moins 5 m²/g, en une proportion suffisante pour que le pourcentage en poids du graphite dans le mélange résultant soit amené dans une gamme allant d'environ 1 à envrion 48% et mélangeage de la poudre de graphite et du mélange de manière à disperser la poudre de graphite de façon essentiellement homogène dans le mélange graphité résultant; et

e. formage du mélange graphité de manière à produire un objet formé microporeux ayant une densité d'au moins environ 50% de la théorie.

9. Procédé de préparation d'un corps composite céramique fritté en carbure de silicium/carbone, selon la revendication 8, caractérisé en ce que le mélange comprend d'environ 5 parties en poids de B$_X$C où «x» est compris entre 2 et 8, ledit B$_X$C contenant d'environ 0,3 à environ 3,0% en poids de bore.

10. Procédé selon la revendication 1, caractérisé en ce que la formation d'un mélange homogène décrite dans l'étape a. comprend:

i. la dissolution d'une matière organique qui peut être cokéfiée dans un solvant; et

ii. le mélange de la solution ainsi formée avec les composants restants, et séchage du mélange avant le formage.

11. Procédé selon l'une quelconque des revendications 1 à 7, caractérisé en ce que le liant temporaire est utilisé en une proportion d'environ 1,5 à environ 5% en poids.

12. Procédé selon la revendication 8 ou 9, caractérisé en ce que le liant temporaire est durcissable, et en ce qu'il comprend une étape de durcissement du liant temporaire après formage du mélange séché avant la cuisson de l'objet formé.

13. Procédé selon la revendication 1, caractérisé en ce que l'objet formé est infiltré avec une résine phénol-formaldéhyde et que l'objet infiltré est ensuite porté à une température d'environ 90°C à environ 150°C pendant environ 1 heure à 2 heures, pour durcir la résine d'infiltration.

14. Procédé selon les revendications 8, 9 ou 12, caractérisé en ce que le corps formé est cuit pendant environ 20 à environ 180 minutes à une température d'environ 2100°C à environ 2300°C et sous une pression allant jusqu'à environ une atmosphère (101,33 kN/m²) d'un gaz choisi dans le groupe constitué de l'argon, l'hélium, le néon, l'azote et leurs mélanges.

15. Procédé selon la revendication 14, caractérisé en ce que le gaz est à environ 1 atmosphère (101,33 kN/m²) et qu'il est choisi dans le groupe constitué par l'argon, l'hélium et le néon, et que la température est d'environ 2050°C à environ 2200°C.

16. Procédé selon les revendications 8, 9, 12 ou 14, caractérisé en ce que le carbure de silicium est essentiellement constitué par le carbure de silicium cristallin, alpha, non cubique.

17. Procédé selon la revendication 1, caractérisé en ce que l'objet formé est infiltré avec une solution aqueuse contenant de 25 à 100% en poids d'une résine phénol-formaldéhyde ayant un rendement de carbonisation d'environ 40% en poids.

18. Procédé selon la revendication 1, caractérisé en ce que la résine qui a été infiltrée dans l'objet formé est durcie et qu'ensuite, le cycle d'infiltration est répété.

19. Procédé selon la revendication 1, caractérisé en ce que le corps composite fritté est infiltré avec une résine constituant une source de carbone et ensuite, il est réchauffé pour cokéfier la résine in situ.

FIG. I

FIG.2

40μ

FIG.3

FIG.4

FIG.5

40 μ

FIG.6

FIG.7

FIG.8

FIG.9

40 μ

FIG.10

FIG.11

FIG.12

FIG.13

40μ

FIG.14

FIG.15

FIG.16

FIG.17

40μ

FIG.18

FIG.19

FIG.20

FIG.21

40 μ

FIG.22

FIG.23